# EUROPEAN PATENT APPLICATION

(11) **EP 4 380 013 A1**
(43) Date of publication of application: **05.06.2024**
(21) Application number: 23841838.8
(22) Date of filing: 24.04.2023
(51) Int. Cl.: H02K 3/28, H02K 3/04, H02K 3/48, H02K 3/50, H02K 1/16

(54) **6-POLE, 54-SLOT FLAT COPPER WIRE MOTOR WINDING STRUCTURE HAVING TWO BALANCED BRANCHES**

(30) Priority: 20.07.2022 CN 202210851120
(71) Applicant: GZK Intelligent Power Technology (Shanghai) Co., Ltd, Shanghai 201400 (CN)
(72) Inventor: JIANG, Hua, Shanghai 201400 (CN); YIN, Hao, Shanghai 201400 (CN); GUAN, Bo, Shanghai 201400 (CN); LI, Xijing, Shanghai 201400 (CN)
(74) Representative: Osterhoff, Utz
(86) International application number: PCT/CN2023/090385
(87) International publication number: WO 2024/016765

(57) **Abstract**

The present application relates to the technical field of components of windings of the motor distributed in slots, and in particular to a six-pole, fifty-four-slot flat copper wire motor with two branch balanced winding structures. The six-pole, fifty-four-slot flat copper wire motor with two branch balanced winding structures includes a three-phase flat copper wire winding. The three-phase flat copper wire winding includes a wire straight portion (4) provided in the iron core slot, a welding end (3) provided at one side of an end of an iron core (2), and a power lead wire end (1) provided at another side of the iron core (2). Spans between the welding ends (3) are equal, and heights of lead wires at the welding ends (3) are equal.

## Description

### CROSS-REFERENCE TO RELATED APPLICATIONS

This application claims priority to Chinese Patent Application No. 202210851120.7, filed on July 20, 2022, the entire contents of which are incorporated herein by reference.

### TECHNICAL FIELD

The present application relates to the technical field of components of windings of the motor distributed in slots, and in particular to a six-pole, fifty-four-slot flat copper wire motor with two branch balanced winding structures.

### BACKGROUND

In the field of driving motors of the existing new energy vehicle, the driving motors gradually tend to develop towards flat copper wires. There are problems such as unbalanced alternating current of the winding branch, many special-shaped wires, and poor mass production processability in the driving motors of the new energy vehicle. As the power frequency gradually increases, due to the increasing skin effect and proximity effect of the motor winding, the parallel branch currents of each phase winding will be distributed unevenly, and there will be circulating currents between the branches, eventually causing uneven heating of the branches at the inner layer winding and the outer layer winding, so that the insulation system of the motor will be damaged. Since the windings of flat copper wire motors includes multiple parallel branches, the bridge wires, the star point connection wire, the power lead wire and other special-shaped wires connected to the ends of the flat copper wires have complex structures, which cannot meet requirements of the automated mass production process of flat wire windings.

### SUMMARY

In order to overcome the shortcomings of the related art and provide a motor winding structure with compact structure and balanced current, the present application provides a six-pole, fifty-four-slot flat copper wire motor with two branch balanced winding structures.

The present application achieves the purpose through the following technical solutions.

A six-pole, fifty-four-slot flat copper wire motor with two branch balanced winding structures includes a three-phase flat copper wire winding provided symmetrically along a circumferential direction of an iron core slot. The three-phase flat copper wire winding includes a wire straight portion provided in the iron core slot, a welding end provided at one side of an end of an iron core, and a power lead wire end provided at another side of the iron core.

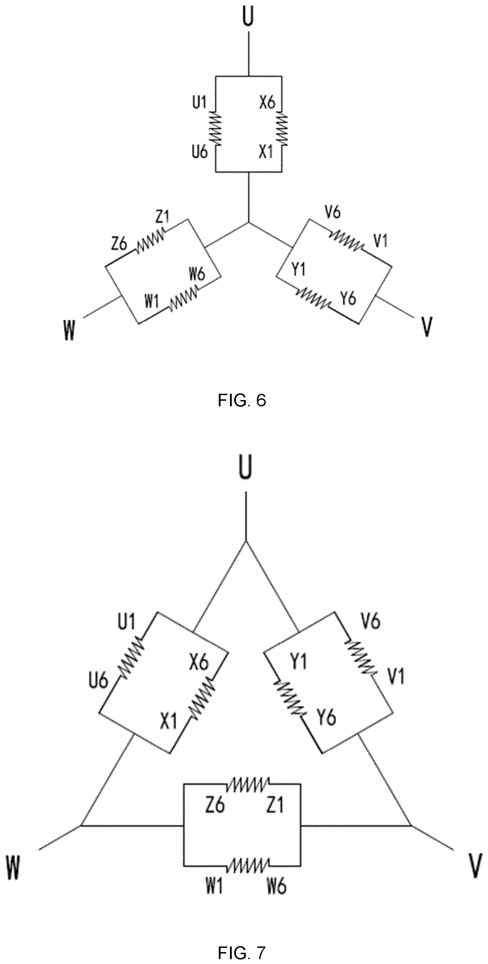

Spans between the welding ends are equal, and heights of lead wires at the welding ends are equal, the power lead wire end is composed of U-pin wires and special-shaped wires with three spans. For a star-shaped connection method (as shown in FIG. 6), a special-shaped wire includes a U-phase power wire, a V-phase power wire, a W-phase power wire, an inner star point wire and an outer star point wire, and there are no other protruding shaped wires or bridging wires. For a triangle-shaped connection method, the special-shaped wire includes the U-phase power wire, the V-phase power wire and the W-phase power wire.

In the six-pole, fifty-four-slot flat copper wire motor with two branch balanced winding structures, the three-phase flat copper wire winding is a multi-layer winding, and each phase winding includes two parallel branches, each layer of the winding is twisted in the same direction, and each branch is composed of each layer of flat copper wire conductors in the core slot.

A number N of layers of the three-phase flat copper wire winding is an even number not less than four, which is suitable for multi-layer flat copper wire winding in each slot.

The three-phase flat copper wire winding is a distributed winding, and a main body of the three-phase flat copper wire winding is in a wave winding form.

In the six-pole, fifty-four-slot flat copper wire motor with two branch balanced winding structures, the U-phase power wire, the V-phase power wire, and the W-phase power wire of the three-phase flat copper wire winding wire adopt the star-shaped connection method (Y-shaped connection method) or the triangle-shaped connection method (that is, the two branches are connected in parallel with the triangle-shaped connection method). The three-phase flat copper wire winding adopts a short span with a span Y of eight, a full span with a span Y of nine, or a long span with a span Y of ten.

In the six-pole, fifty-four-slot flat copper wire motor with two branch balanced winding structures, for the star-shaped connection method, two U-phase power wires, two V-phase power wires, two W-phase power wires, three inner star point wires and three outer star point wires are distributed at an outermost layer winding and an innermost layer winding of the power lead wire end of the flat copper wire winding. For a corner connection method, four U-phase power wires, four V-phase power wires, and four W-phase power wires are distributed at an outermost layer winding and an innermost layer winding of the power lead wire end of the flat copper wire winding.

The connection method of the U-phase power wire, the V-phase power wire, the W-phase power wire, the inner star point wire and the outer star point wire are suitable for the connection of the single molded special-shaped wire, as well as for the connection of internally connected and molded busbars.

The present application overcomes the shortcomings of the related art and provides a six-pole, fifty-four-slot flat copper wire motor with two branch balanced winding structures. The winding structure is composed of three parts, namely the wire straight portion provided in the iron core slot, the welding end provided at one side of the end of the iron core, and the power lead wire end provided at another side of the iron core. Spans between the welding ends of flat copper wire motor winding are equal, and heights of lead wires at the welding ends are equal. For a star-shaped connection method, the power lead wire end is composed of three span U-pin wires and six special-shaped wires that constitute the power lead wire and six star points. There are no other protruding special-shaped wires and bridge wires. For a corner connection method, the power lead end consists of three span U-pin wires and twelve power lead wires, without other protruding special-shaped wires and bridge wires. There are only three types of spans for all U-Pin wires, and the skew direction of each layer of conductors is the same. In addition, the number and type of special-shaped wires remain unchanged. For the star-shaped connection method, it is composed of six power lead wires and six star point wires, which are distributed at the ends of the outermost layer winding and the innermost layer winding (three star point wires of the same type on the outer layer, three power lead wires of the same type, and three star point wires of the same type on the inner layer, three power lead wires of the same type). For the corner connection, it consists of twelve power lead wires, which are distributed at the ends of the outermost layer winding and the innermost layer winding (six power lead wires of the same type on the outermost layer, six power lead wires of the same type on the innermost layer, and no other protruding cross-bridge wires).

### Beneficial effect

1. The current of the three-phase windings is balanced, and the branch current of each phase flat copper wire winding can be balanced, which reduces the adverse effects of increased AC losses in the windings due to unbalanced branch currents, reduces the circulating current between branches, and reduces the winding copper loss, thereby improving the motor efficiency.
2. Since the problem of unbalanced current in each branch is solved, the uneven temperature distribution in the inner and outer layers of the flat copper wire winding is improved, thereby improving the reliability of the entire stator insulation system.
3. The winding welding ends have equal spans and heights, and the circumferential distribution is consistent, which facilitates mass production processes such as automatic expansion, twisting, cutting, welding and coating, thereby reducing the complexity of automation equipment and facilitating mass production automation.
4. There are few special-shaped wires at the winding power lead end. For the star-shaped connection, except for the six power lead wires and six star point wires, there are no other protruding cross-bridge wires. For the corner connection, except for twelve power lead wires, there are no other protruding cross-bridge wires, which requires few molds in the mass production, thereby making it easier for the equipment to realize automatic wiring.
5. Since the power lead wire and star point wire are located in the outermost and innermost layers, the yoke space of the armature core or the inner diameter space layout of the armature winding end can be used to shorten the axial end height of the motor winding.

### BRIEF DESCRIPTION OF THE DRAWINGS

FIG. 1 is a front view of an iron core and a star-connected flat copper wire winding structure according to the present application.
FIG. 2 is a view of a welding end of the iron core and the star-connected flat copper wire winding structure according to the present application.
FIG. 3 is a view of a power lead wire end of the iron core and the star-connected flat copper wire winding structure according to the present application.
FIG. 4 is an expanded principle connection view of the star-connected U-phase winding according to the present application.
FIG. 5 is an expanded principle connection view of the star-connected U-phase winding, V-phase winding, W-phase winding according to the present application.
FIG. 6 is a connection view of the lead wires at the star-connected end of the U-phase winding, V-phase winding, W-phase winding according to the present application.
FIG. 7 is a connection view of the lead wires at the corner connection end of the U-phase winding, V-phase winding, W-phase winding according to the present application.

### DETAILED DESCRIPTION OF THE EMBODIMENTS

The present application will be further described below through specific embodiments.

### The first embodiment

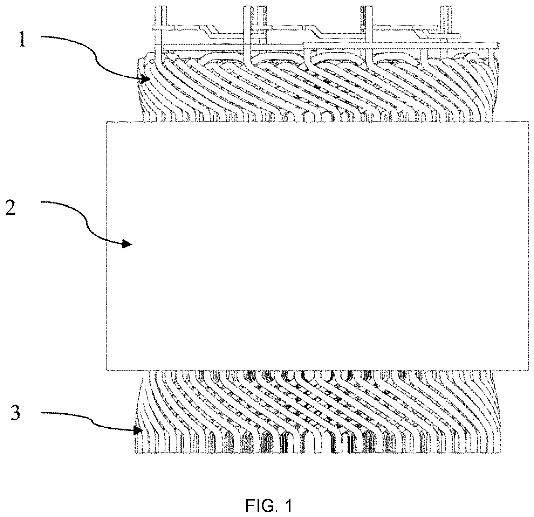

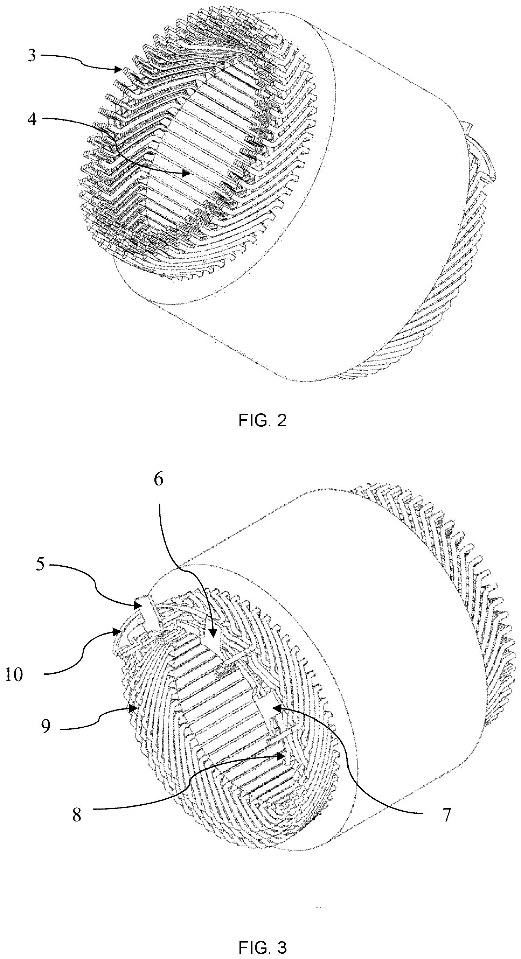

The six-layer, fifty-four-slot flat copper wire with a short span (Y=8), star-shaped connection, and a number of parallel branches (a=2) is taken as an example to illustrate the winding connection structure. As shown in FIG. 1 to FIG. 6, the specific structure is as follows.

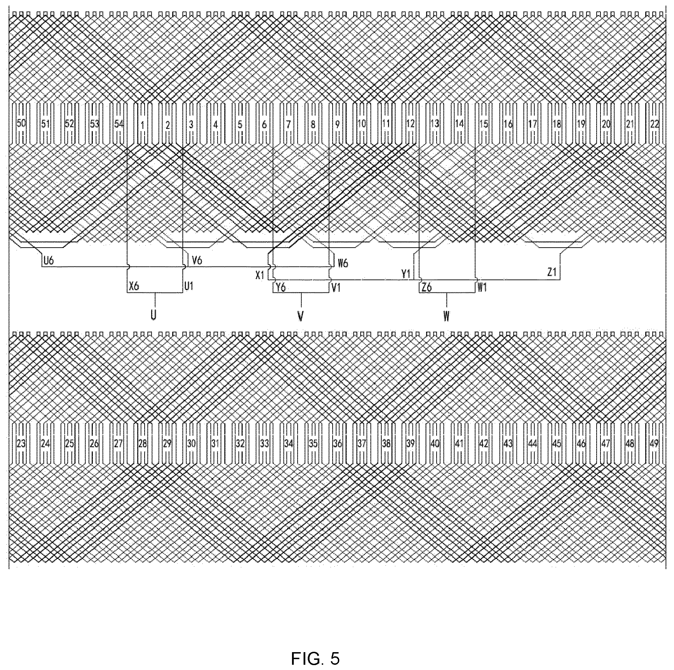

As for the wire straight portion of the winding, the wire straight portion of the three-phase flat copper wire winding is evenly divided into the three-phase symmetrical windings with U-phase, V-phase and W-phase according to the short span (Y=8), as shown in FIG. 5.

The expanded view of the winding is a six-layer flat copper wire winding, that is, there are six flat copper wires in each slot.

The winding adopts the star-shaped connection method, the number of parallel branches a is 2, and each phase winding is composed of two branches connected in parallel.

As shown in FIG. 5 and FIG. 6, the U-phase winding is composed of a forward branch 1 (U1-U6) and a reverse branch 2 (X6-X1), and the V-phase winding is composed of a forward branch 1 (V1-V6) and a reverse branch 2 (Y6-Y1), and the W-phase winding is composed of a forward branch 1 (W1-W6) and a reverse branch 2 (Z6-Z1).

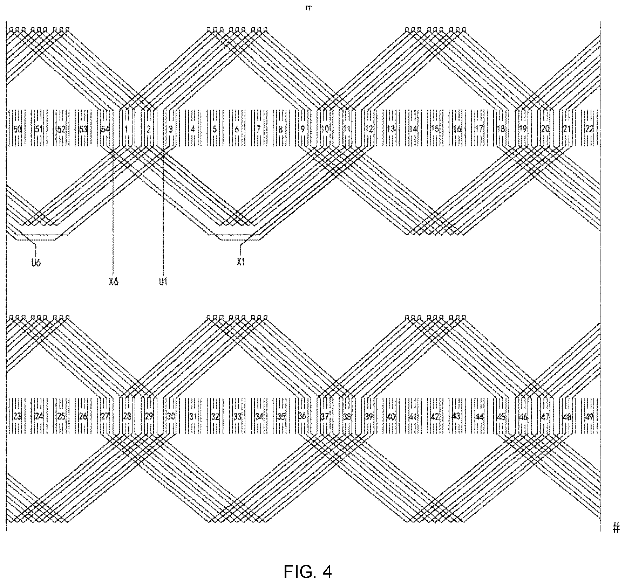

As shown in FIG. 4, the first end U1 of the U-phase forward branch 1 (U1-U6) enters from the first layer L1 of the slot 3 of the winding, enters the second layer L2 of the slot 11 with a span (Y1=8), enters the first layer L1 of the slot 21 with the span (Y2=10), and then in the same order enters the second layer L2 of the slot 29, the first layer L1 of the slot 39, the second layer L2 of the slot 47, and the first floor L1 of the slot 2 with the span (Y2=9). Then in the same order, the first end U1 of the U-phase forward branch 1 (U1-U6) enters the second floor L2 of the slot 10, the first floor L1 of the slot 20, the second floor L2 of the slot 28, the first floor of the slot 38, the second floor L1 of the slot 46, the first floor L1 of the slot 1, the second floor L2 of the slot 9, the first floor L1 of the slot 19, the second floor L2 of the slot 27, the first floor L1 of the slot 37, the second floor L2 of the slot 45. Then the first end U1 of the U-phase forward branch 1 (U1-U6) enters the third layer L3 of the slot 3 with a span (Y2=12), and enters the fourth layer L4 of the slot 11 according to the same order as the first and second floors, and enters the third layer L3 of the slot 21, the fourth floor L4 of the slot 29, the third floor L3 of the slot 39, the fourth floor L4 of the slot 47, the third floor L3 of the slot 2, the fourth floor L4 of the slot 10, the third floor L3 of the slot 20, the fourth floor L4 of the slot 28, the third floor L3 of the slot 38, the fourth floor L4 of the slot 46, the third floor L3 of the slot 1, the fourth floor L4 of the slot 9, the third floor L3 of the slot 19, the fourth floor L4 of the slot 27, the third floor L3 of the slot 37, the fourth floor L4 of the slot 45, the fifth floor L5 of the slot 3. Then in the same order as the third and fourth floors, the first end U1 of the U-phase forward branch 1 (U1-U6) enters the sixth floor L6 of the slot 11, the fifth floor L5 of the slot 21, the sixth floor L6 of the slot 29, the fifth floor L5 of the slot 39, the sixth floor L6 of the slot 47, the fifth floor L5 of the slot 2, the sixth floor L6 of the slot 10, the fifth floor L5 of the slot 20, the sixth floor L6 of the slot 28, the fifth floor L5 of the slot 38, the sixth floor L6 of the slot 46, the fifth floor L5 of the slot 1, the sixth floor L6 of the slot 9, the fifth floor L5 of the slot 19, the sixth floor L6 of the slot 27, the fifth floor L5 of the slot 37, the sixth floor L6 of the slot 45, and then is led to the tail end U6 of the forward branch 1.

The wiring method of the U-phase reverse branch 2 (X6-X1) is the same as that of the U-phase branch forward branch 1 (U1-U6), except that the wiring method is distributed along the circumference direction opposite to the forward direction. The first end X6 of the reverse branch 2 enters from the sixth layer L6 of the slot 3 of the winding, and finally is led out from the first layer of the slot 12 to the tail end X1 of the reverse branch 2. The detailed connection method is as shown in FIG. 4.

In the same way, the forward branch 1 (V1-V6) and the reverse branch 2 (Y6-Y1) of the V-phase winding, the forward branch 1 (W1-W6) and the reverse branch 2 (Z6-Z1) of the W-phase winding are wired according to the same order as the U-phase winding, which can be seen in FIG. 5 for details.

As shown in the expanded principle connection view of the three-phase winding principle in FIG. 5, the power supply lead wire is composed of the U phase (composed of U1, X6), the V phase (composed of V1, Y6) and the W phase (composed of W1, Z6), and the three-phase layout space does not cross. U1, V1, and W1 are all distributed at the first layer of the winding, and X6, Y6, and Z6 are all distributed at the sixth layer of the winding.

The two star points X1-Y1-Z1 and U6-V6-W6 are distributed at the innermost layer winding and the outermost layer winding at the power lead wire end. When arranging the connections, it is beneficial to utilize the radial space at the end, thereby shortening the axial height of the end.

In the second embodiment, the six-layer, fifty-four-slot flat copper wire with short span (Y=8), and a number of parallel branches (a=2) is taken as an example. As shown in FIG. 5 and FIG. 7, the specific structure is as follows.

As for the wire straight portion of the winding, the wire straight portion of the three-phase flat copper wire winding is evenly divided into the three-phase symmetrical windings with U-phase, V-phase and W-phase according to the short span (Y=8), as shown in FIG. 5.

The expanded view of the winding is a six-layer flat copper wire winding, that is, there are six flat copper wires in each slot.

The winding adopts the corner connection method, the number of parallel branches a is 2, and each phase winding is composed of two branches connected in parallel.

The wire straight portion, and the welding end of the winding are exactly the same as that in FIG. 5. The difference is that the three-phase winding does not adopt the star-connected method, but adopts the corner connection method. The connection method of the power lead wire is as shown in FIG. 7. The U-phase winding is composed of (U1-X6-Y1-V6), the V-phase winding is composed of (V1-Y6-Z1-W6), and the W-phase winding is composed of (W1-Z6-X1-U6).

## Claims

1. A six-pole, fifty-four-slot flat copper wire motor with two branch balanced winding structures, **characterized by** comprising a three-phase flat copper wire winding provided symmetrically along a circumferential direction of an iron core slot, wherein:
the three-phase flat copper wire winding comprises a wire straight portion (4) provided in the iron core slot, a welding end (3) provided at one side of an end of an iron core (2), and a power lead wire end (1) provided at another side of the iron core (2),
spans between the welding ends (3) are equal, and heights of lead wires at the welding ends (3) are equal, the power lead wire end (1) is composed of U-pin wires (9) and special-shaped wires with three spans,
for a star-shaped connection method, a special-shaped wire comprises a U-phase power wire (5), a V-phase power wire (6), a W-phase power wire (7), an inner star point wire (8) and an outer star point wire (10), and
for a triangle-shaped connection method, the special-shaped wire comprises the U-phase power wire (5), the V-phase power wire (6) and the W-phase power wire (7).

2. The six-pole, fifty-four-slot flat copper wire motor with two branch balanced winding structures according to claim 1, wherein:
the three-phase flat copper wire winding is a multi-layer winding, and each phase winding comprises two parallel branches, and each branch is composed of each layer of flat copper wire conductors in the core slot;
a number N of layers of the three-phase flat copper wire winding is an even number not less than four; and
the three-phase flat copper wire winding is a distributed winding, and a main body of the three-phase flat copper wire winding is in a wave winding form.

3. The six-pole, fifty-four-slot flat copper wire motor with two branch balanced winding structures according to claim 1 or 2, wherein the U-phase power wire (5), the V-phase power wire, and the W-phase power wire (7) of the three-phase flat copper wire winding wire (6) adopt the star-shaped connection method or the triangle-shaped connection method, and the three-phase flat copper wire winding adopts a short span with a span Y of eight, a full span with a span Y of nine, or a long span with a span Y of ten.

4. The six-pole, fifty-four-slot flat copper wire motor with two branch balanced winding structures according to claim 3, wherein the winding structure adopts a two-branch star-shaped connection method, and two U-phase power wires (5), two V-phase power wires (6), two W-phase power wires (7), three inner star point wires (8) and three outer star point wires (10) are distributed at an outermost layer winding and an innermost layer winding of the power lead wire end (1) of the flat copper wire winding.

5. The six-pole, fifty-four-slot flat copper wire motor with two branch balanced winding structures according to claim 3, wherein the winding structure adopts a two-branch triangle-shaped connection method, four U-phase power wires (5), four V-phase power wires (6), and four W-phase power wires (7) are distributed at an outermost layer winding and an innermost layer winding of the power lead wire end (1) of the flat copper wire winding.
